# FASCICULE DE BREVET EUROPEEN

(11) **EP 3 174 744 B1**
(45) Date de publication et mention de la délivrance du brevet: **12.09.2018**
(21) Numéro de dépôt: 15753403.3
(22) Date de dépôt: 24.07.2015
(51) Int. Cl.: B60G 21/05

(54) **SUSPENSION DE VÉHICULE AUTOMOBILE A BARRE DE TORSION COMPOSITE COLLE**
KRAFTFAHRZEUGAUFHÄNGUNG MIT VERKLEBTEM VERBUNDTORSIONSSTAB
MOTOR VEHICLE SUSPENSION WITH GLUED COMPOSITE TORSION BAR

(30) Priorité: 31.07.2014 FR 1457444
(43) Date de publication de la demande: 07.06.2017
(73) Titulaire: Renault S.A.S., 92100 Boulogne-Billancourt (FR)
(72) Inventeur: RIFFIER, Bruno, F-72210 Fille sur Sarthe (FR); COTTIN, Fabrice, F-72220 Saint Ouen en Belin (FR); ROLLET, Remi, F-91190 Gif Sur Yvette (FR)
(86) Numéro de dépôt international: PCT/FR2015/052054
(87) Numéro de publication internationale: WO 2016/016557

(56) Documents cités:
- EP-A1- 0 097 540
- EP-A1- 2 136 135
- EP-A2- 1 036 680
- WO-A1-2012/101365
- CN-U- 203 466 201
- CN-Y- 2 891 287
- DE-A1-102012 017 940
- DE-A1-102012 021 289
- DE-A1-102013 011 421
- FR-A1- 2 876 629
- US-A1- 2013 093 156

## Description

### DOMAINE TECHNIQUE DE L'INVENTION

L'invention concerne une technique d'assemblage et de fixation d'une barre de torsion, notamment dans une suspension de véhicule automobile.

### ARRIERE PLAN TECHNIQUE DE L'INVENTION

L'invention concerne plus particulièrement une suspension de véhicule automobile, et notamment un essieu arrière, du type comportant une barre de torsion d'orientation axiale, constituant la traverse d'orientation transversale par rapport à l'orientation longitudinale générale du véhicule, de conception générale tubulaire et dont au moins chacun des deux tronçons d'extrémité axiale est de forme tubulaire.

Cette barre de torsion formant traverse est associée, à chacune de ses deux extrémités axiales, à un organe de suspension qui est un bras longitudinal associé complémentaire dont chacun supporte une roue arrière, respectivement gauche et droite, du véhicule.

De manière connue, chaque bras de suspension comporte un alésage d'orientation axiale transversale à l'intérieur duquel un tronçon d'extrémité axiale tubulaire de la barre de torsion s'étend axialement.

Pour la fixation du tronçon d'extrémité axiale tubulaire dans l'alésage associé, il est connu d'interposer au moins une première couche de colle, ou d'adhésif, de fixation entre une paroi externe périphérique convexe du tronçon d'extrémité axiale de la barre de torsion ou traverse, et une paroi interne concave en vis-à-vis de l'alésage du bras de suspension.

Une telle technique de liaison et de fixation par collage est notamment utilisée lorsqu'il s'agit de relier une barre de torsion formant traverse en matériau dit "composite" à matrice en matériau plastique et/ou synthétique, à un bras de liaison métallique, par exemple à structure mécano-soudée ou moulée en aluminium.

Tant la structure et la composition de la barre de torsion, notamment appliquée à une traverse pour essieu de véhicule automobile, que la conception générale d'un tel train arrière à traverse déformable ont fait l'objet de nombreux développements dont certains sont par exemple illustrés dans les documents FR-A-2.954.921 et FR-A-2.985.221.

La liaison et la fixation par collage doivent répondre à de nombreux impératifs et prendre notamment en compte les sollicitations mécaniques auxquelles est soumise la traverse de l'essieu.

L'ensemble des efforts et forces résultant de ces sollicitations est transmis au bras longitudinal "à travers" la liaison collée entre le tronçon tubulaire d'extrémité de la barre de torsion et l'alésage récepteur du bras longitudinal.

De plus, la qualité de l'assemblage et sa résistance résultent d'un compromis visant à prendre en compte des contraintes fonctionnelles complexes telles que la dilatation différentielle entre les pièces métallique et en matériau synthétique, le comportement du film ou de la couche de colle lors de l'emboîtement axial du tronçon d'extrémité de la barre de torsion dans l'assemblage avec le phénomène connu de "raclage" de la colle, la maîtrise géométrique des formes et dimensions des différents composants, etc.

On connait du document DE-A1-102012017940 une suspension comportant une barre de torsion d'orientation axiale dont au moins un tronçon d'extrémité axiale est tubulaire ; au moins un organe de suspension associé comportant un alésage d'orientation axiale à l'intérieur duquel le tronçon d'extrémité axiale tubulaire s'étend axialement ; une bague de liaison d'orientation axiale qui est liée en rotation à l'organe de suspension et qui s'étend axialement à l'intérieur du tronçon d'extrémité tubulaire de la barre de torsion, et dans laquelle une paroi interne concave de l'alésage et une paroi externe convexe de la bague de liaison délimitent entre elles un logement annulaire d'orientation axiale, apte à recevoir un dépôt de colle, ou d'adhésif, de fixation et dans lequel le tronçon d'extrémité axiale tubulaire de la barre de torsion composite est introduit axialement.

Ainsi, une première couche de colle, ou d'adhésif, de fixation est interposée radialement entre une paroi externe convexe du tronçon d'extrémité axiale de la barre de torsion et une paroi interne concave en vis-à-vis de l'alésage, et une deuxième couche de colle, ou d'adhésif, de fixation est interposée radialement entre une paroi interne concave du tronçon d'extrémité axiale de la barre de torsion et une paroi externe convexe en vis-à-vis de la bague de liaison.

### BREF RESUME DE L'INVENTION

L'invention propose une suspension de ce type dans laquelle, en vue de faciliter l'assemblage, il est prévu une virole complémentaire à section en L, radialement intérieure ou radialement extérieure, qui est rapportée à une extrémité axiale libre de la bague de liaison ou à une extrémité axiale libre de l'alésage, et dont un bord annulaire circulaire assure un centrage radial du tronçon d'extrémité de la barre de torsion.

Selon d'autres caractéristiques de l'invention :
- la virole complémentaire permet un écoulement et un échappement de l'air contenu dans ledit logement, tout en freinant la colle ;
- que la bague de liaison comporte une portée cylindrique convexe de centrage qui est reçue axialement, sans jeu radial, à l'intérieur d'une portion complémentaire de l'organe de suspension ;
- l'alésage est débouchant axialement, en la bague de liaison s'étend axialement à l'intérieur de l'alésage à partir d'une extrémité axiale de l'alésage, et en ce que le tronçon d'extrémité tubulaire de la barre de torsion s'étend axialement à travers l'alésage à partir de l'autre extrémité axiale de l'alésage ;
- la bague de liaison comporte une collerette de fixation qui s'étend radialement vers l'extérieur et qui est fixée à l'organe de suspension au voisinage de ladite une extrémité de l'alésage ;
- la suspension comporte des moyens de liaison en rotation du tronçon d'extrémité tubulaire de la barre de torsion et de la bague de liaison ;
- la bague de liaison d'orientation axiale est réalisée en une seule pièce avec l'organe de suspension ;
- la bague de liaison comporte une collerette de liaison qui s'étend radialement vers l'extérieur et qui est fixée à l'organe de suspension au voisinage de ladite une extrémité de l'alésage ;
- la suspension comporte une virole complémentaire radialement intérieure et une virole complémentaire radialement extérieure ;
- chacun des deux tronçons d'extrémité axiale opposés de la barre de torsion est conformé de manière identique et est fixé à un organe de suspension complémentaire associé ;
- la barre de torsion est réalisée en matériau composite à matrice synthétique ; et
- la barre de torsion est une traverse déformable, et en ce que l'organe de suspension est un bras longitudinal qui supporte une roue du véhicule, notamment une roue arrière.

### BREVE DESCRIPTION DES FIGURES

D'autres caractéristiques et avantages de l'invention apparaîtront au cours de la lecture de la description détaillée qui va suivre pour la compréhension de laquelle on se reportera aux dessins annexés dans lesquels :
- la figure 1 est une vue générale en perspective éclatée illustrant un mode de réalisation d'une suspension et sur laquelle sont représentés, avant leur assemblage et fixation, un bras longitudinal, le tronçon axial associé de la barre de torsion et la bague tubulaire de liaison;
- la figure 2 est une vue en perspective, selon un autre angle de vue, des composants de la figure 1 qui sont représentés dans la position géométrique respective qu'ils occupent après assemblage ;
- la figure 3 est une vue, en section axiale par un plan vertical, des trois composants illustrés à la figure 2 avec représentation des deux couches, ou films, de colle de fixation;
- la figure 4 est une vue en perspective illustrant un autre mode de réalisation de la bague tubulaire de liaison et du tronçon complémentaire associé d'extrémité axiale de la barre de torsion ;
- la figure 5 est une vue analogue à celle de la figure 4 sur laquelle les deux composants sont illustrés en perspective selon un autre angle de vue ;
- la figure 6 est une vue schématique analogue à celle de la figure 3 illustrant un mode de réalisation selon l'état de la technique dans lequel la bague tubulaire de liaison est réalisée en une seule pièce avec l'organe de suspension ;
- la figure 7 est une vue analogue à celle de la figure 6, illustrant une étape intermédiaire de l'assemblage et du collage ;
- la figure 8 est une vue analogue à celle de la figure 6 illustrant la conception selon l'invention comportant une virole complémentaire.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" des figures. On définit aussi un plan horizontal qui s'étend longitudinalement et transversalement.

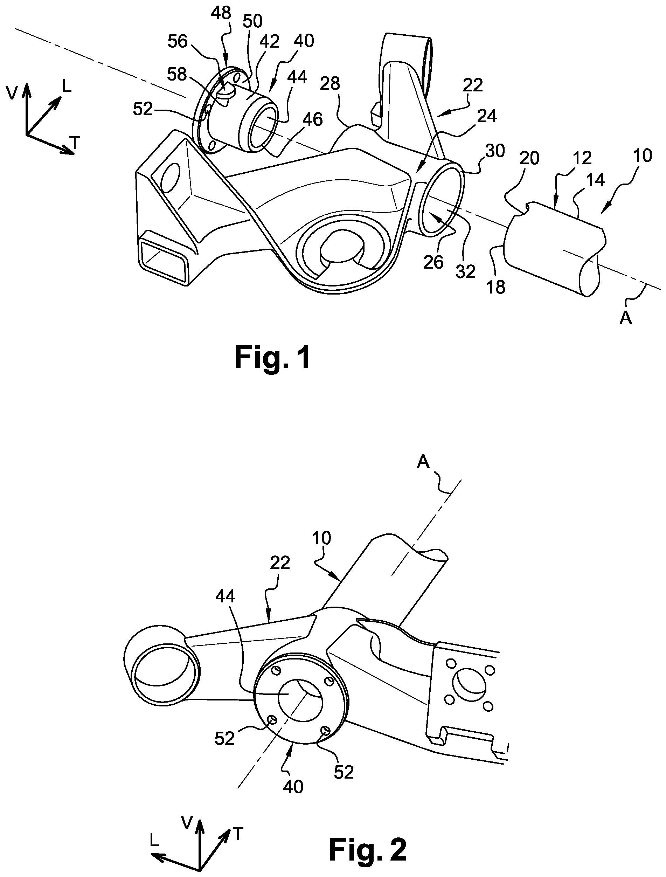

On a représenté aux figures 1 à 3, le tronçon d'extrémité axiale 12 d'une barre de torsion 10 formant traverse transversale qui est de conception générale tubulaire.

La barre de torsion 10 et le tronçon d'extrémité axiale 12 sont délimités par une surface périphérique externe convexe 14 et par une surface périphérique interne concave 16, la barre de torsion 10 étant ici de profil cylindrique de révolution à génératrice circulaire.

Le tronçon 12 est délimité axialement par un bord d'extrémité axiale 18 dans lequel est formée une encoche 20 en forme de demi-lune qui débouche axialement dans le bord 18.

On a aussi représenté, aux figures 1 à 3, un bras de suspension 22 de conception générale connue qui est ici une pièce métallique mécano-soudée ou aluminium qui comporte notamment une partie centrale tubulaire 24 dans laquelle est formé un alésage axial débouchant 26 qui s'étend axialement, selon la direction transversale T, entre une première extrémité axiale 28 et une deuxième extrémité axiale 30.

L'alésage 26 présente ici un profil de révolution cylindrique circulaire et il est délimité par une surface périphérique interne concave 32.

De manière connue, les dimensions du tronçon d'extrémité axial 12 et de l'alésage 26 sont telles qu'elles permettent un assemblage et une liaison ou fixation par collage au moyen d'une première couche de colle, ou d'adhésif de fixation 34 qui est interposée radialement entre les surfaces cylindriques circulaires convexe 14 et concave 32 en vis-à-vis de la barre de torsion 10 et de l'alésage 26 respectivement.

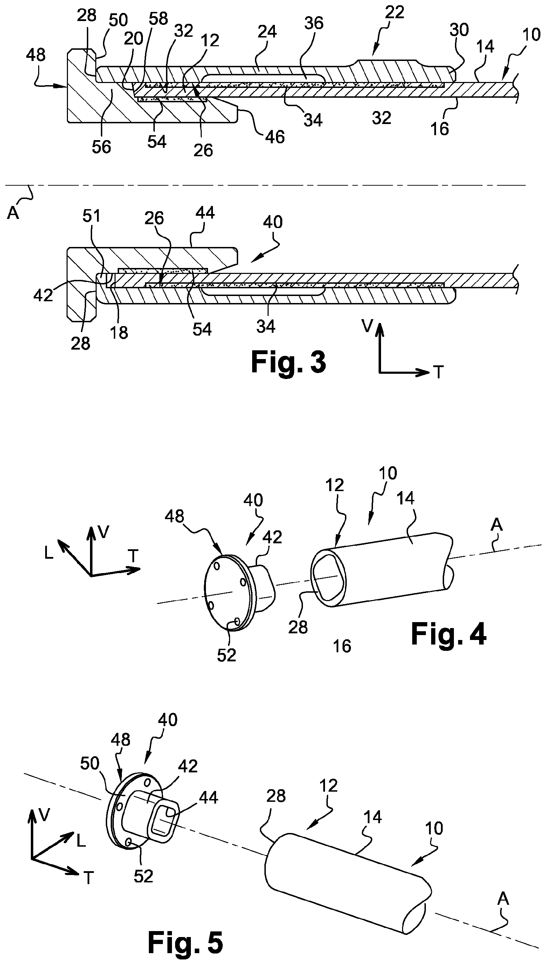

Pour faciliter un tel assemblage et collage, l'alésage 26 peut comporter, comme on le voit à la figure 3, des rainures axiales 36.

L'agencement illustré aux figures 1 à 3 comporte une bague tubulaire de liaison 40.

La bague 40 est délimitée radialement, d'une part, par une surface périphérique externe convexe 42, ici de profil cylindrique circulaire et, d'autre part, par une surface périphérique interne concave 44 de profil cylindrique circulaire.

La bague tubulaire de liaison 40 est délimitée axialement à une de ses deux extrémités par un bord d'extrémité 46 tandis qu'elle comporte, à son autre extrémité axiale, une collerette de fixation 48 qui s'étend radialement vers l'extérieur et qui est délimitée axialement par une face verticale d'extrémité 50.

Dans l'exemple de réalisation illustrée aux figures 1 à 3, à titre non limitatif, la bague tubulaire de liaison 40 s'étend axialement, selon l'axe A d'assemblage et de fixation des trois composants 10, 22 et 40, à l'intérieur de l'alésage 26 et à l'intérieur du tronçon d'extrémité axiale tubulaire 12 de la barre de torsion 10.

En position assemblée et fixée, la face verticale 50 de la collerette 48 et en appui axial contre le bord d'extrémité axiale 28 de la partie tubulaire 24 du bras longitudinal de suspension 22.

La bague tubulaire de liaison 40 est centrée radialement à l'intérieur de l'alésage 26 et, à cet effet, la partie tubulaire 24 comporte, au voisinage de son bord d'extrémité axiale 28, une collerette radiale 51 qui s'étend radialement vers l'intérieur et qui coopère, sans jeu radial, avec la surface périphérique convexe 42 de la bague tubulaire de liaison 40 qui, dans la zone axiale concernée, constitue une portée de centrage radial de la bague tubulaire de liaison 40 dans l'alésage 26.

La bague tubulaire de liaison 40 comporte des moyens pour sa fixation sur le bras longitudinal de suspension 22, et notamment pour son immobilisation en rotation autour de l'axe A qui sont ici constitués par une série de trous axiaux 52 dont chacun est apte à recevoir par exemple une vis de fixation (non représentée) qui est reçue et vissée dans un trou taraudé complémentaire (non représenté sur les figures), formé dans la partie tubulaire 24 en regard des trous 52.

L'agencement et les dimensions de la bague tubulaire 40, du bras longitudinal 22 et notamment de son alésage 26, ainsi que du tronçon d'extrémité axiale 12 de la barre de torsion 10, sont tels qu'il existe une deuxième zone de fixation par collage entre les portions en vis-à-vis de la surface concave 16 de la barre de torsion 10 et la surface externe convexe 42 de la bague tubulaire de liaison 40.

Ainsi, il est prévu une deuxième couche ou film de colle, ou d'adhésif, de fixation 54 qui est interposée radialement entre les deux portions en vis-à-vis des deux composants 10 et 40.

A la figure 3, les deux films de colle 34 et 54 sont illustrés de manière schématique avec une épaisseur radiale importante ne correspondant pas à la réalité, mais à des fins de compréhension.

Afin d'assurer, de manière fiable, l'immobilisation en rotation de la barre de torsion 10 par rapport au bras longitudinal 22, il est prévu des moyens d'immobilisation en rotation du tronçon d'extrémité axiale 12 par rapport à la bague tubulaire de liaison 40 qui est elle-même immobilisée en rotation par rapport au bras longitudinal 22.

Dans le mode de réalisation illustré aux figures 1 à 3, la bague tubulaire de liaison 40 comporte, sur sa surface périphérique externe convexe 42 et au voisinage de la face verticale d'extrémité 50 de la collerette radiale 48, un ergot ou doigt 56 qui est formé en relief et qui s'étend ainsi radialement selon la direction verticale V vers l'extérieur et dont le contour ou profil 58, ainsi que les dimensions, sont complémentaires de ceux de l'encoche 20 de la barre de torsion 10.

Ainsi, en position assemblée, et comme on peut le voir à la figure 3, l'ergot 56 d'immobilisation en rotation est reçu dans l'encoche 20 du tronçon d'extrémité axiale 12 de la barre de torsion 10.

La bague tubulaire de liaison 40 participe au positionnement et au centrage du tronçon d'extrémité axiale 12 de la barre de liaison 10 par rapport à l'alésage 26 du bras longitudinal de suspension 22, ainsi qu'au renforcement de la liaison et de la fixation par collage entre la barre de torsion 10 en matériau composite formant traverse et le bras longitudinal d'essieu arrière 22.

Les surfaces encollées sont augmentées par rapport à l'agencement connu faisant appel à une seule couche de colle en réalisant ainsi un "double" encollage extérieur avec l'alésage 26 du bras de suspension 22 et intérieur avec la bague tubulaire de liaison 40.

Du fait de la fixation de la bague tubulaire de liaison 40 sur le bras de suspension 22 et de la coopération du doigt 56 avec l'encoche 20, la bague de liaison 40, outre ses fonctions de centrage et d'augmentation des surfaces encollées, assure une reprise partielle des efforts de cisaillement et complémentaires.

L'assemblage des trois composants peut s'effectuer de différentes manières.

Selon un exemple, l'assemblage peut commencer par l'encollage de la couche 34 et l'introduction axiale, selon l'axe A, du tronçon d'extrémité axiale 12 à l'intérieur de l'assemblage 26.

L'assemblage et la fixation se poursuivent par encollage de la deuxième couche de colle 54, puis l'introduction axiale, de gauche vers la droite en considérant les figures 1 et 3, de la bague tubulaire de liaison 40 à l'intérieur de l'alésage 26 et à l'intérieur du tronçon d'extrémité tubulaire 12 en introduisant, après orientation angulaire correcte, l'ergot 56 dans l'encoche 20 et en amenant les trois composants en butée axiale selon l'agencement illustré à la figure 3.

Avant séchage, il faut bien entendu aussi assurer l'orientation angulaire de la bague tubulaire de fixation 40 par rapport à la partie tubulaire 24 du bras longitudinal 22 pour permettre sa fixation axiale et son immobilisation en rotation au moyen des vis à mettre en place dans les trous 52.

L'encollage, ou dépôt, des deux couches de colle de fixation 34 et 54 peut être effectué sur le tronçon d'extrémité axiale 12 de la barre de torsion 10.

Tous autres exemples d'une séquence différente d'assemblage des trois composants est possible.

On décrira maintenant le mode de réalisation illustré aux figures 4 et 5 qui diffère du mode de réalisation précédent par la conception des moyens de liaison en rotation entre le tronçon d'extrémité axiale 12 de la barre de torsion 10 et la bague tubulaire de liaison 40.

La barre de torsion 10 est ici une barre tubulaire dont la surface périphérique externe convexe est de révolution à profil cylindrique circulaire, tandis que sa surface périphérique interne concave est de section globalement polygonale, non de révolution, et ici à section carrée à angles arrondis.

Une telle barre de torsion 10 en matériau composite peut avantageusement être réalisée par pultrusion.

La bague tubulaire de liaison 40 présente un profil complémentaire, c'est-à-dire que sa surface cylindrique externe convexe 42 est à génératrice polygonale carrée à angles arrondis de manière à pouvoir être reçue axialement à l'intérieur du tronçon d'extrémité axiale 12 avec présence d'une couche ou d'un film de colle 54 selon le mode de réalisation précédent.

Par contre, du fait de la possibilité d'immobiliser la bague tubulaire de liaison 40 en rotation par rapport au bras longitudinal de suspension 22 au moyen des vis reçues dans les trous 52, il n'est pas nécessaire de conformer le bord radial interne de la collerette radiale 52 avec le même profil, celui-ci pouvant toujours être de contour circulaire selon la plus grande dimension en diagonale du profil de la surface périphérique concave 42.

Quel que soit le mode de réalisation, la bague tubulaire de liaison 40 peut être réalisée en tous matériaux, et par exemple en matériau composite à matrice synthétique comme la barre de torsion 10.

Une telle réalisation dans la même catégorie de matériau que la barre de torsion 10 permet avantageusement une maîtrise du collage à l'interface de ces deux pièces 40 et 10 au moyen d'un film de colle ou d'adhésif de fixation 54 dont la composition et la nature peuvent être différentes de celles du film ou couche de colle de fixation 34 interposé entre l'alésage 32 métallique et le tronçon d'extrémité axiale 12 en matériau composite de la barre de torsion 10.

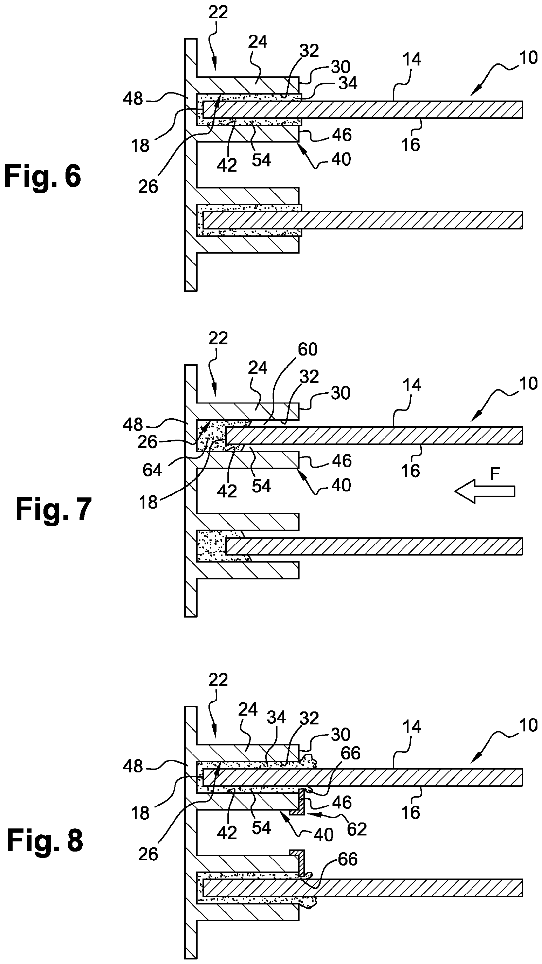

On décrira maintenant un autre mode de réalisation illustrée aux figures 6 à 7 selon l'état de la technique cité en préambule et qui diffère des deux modes de réalisation précédents par la conception de la bague de liaison qui est réalisée en une seule pièce avec l'organe de suspension 22.

Comme on peut le voir sur ces figures, une réalisation mécano-soudée ou par moulage en aluminium peut permettre une telle conception dans laquelle la collerette de fixation 48 est une bague de liaison ou de raccordement qui s'étend radialement vers l'extérieur et qui est reliée à la partie 24 de l'organe de suspension. Ainsi, l'extrémité axiale de gauche de l'alésage 26 est borgne, non débouchante.

Comme on peut le voir par exemple à la figure 7, l'extrémité borgne non débouchante de l'alésage 26, la paroi interne concave 32 de l'alésage 26, et la paroi externe convexe 42 de la bague de liaison 40 délimitent entre elles un logement annulaire 60 d'orientation axiale, qui est apte à recevoir un dépôt de colle, ou d'adhésif, de fixation 64.

L'assemblage et la fixation peuvent ainsi être effectués en déposant la quantité de colle requise dans le logement 60, puis en introduisant axialement, selon la flèche F de la figure 7, le tronçon d'extrémité axiale tubulaire 12 de la barre de torsion composite 10 dans le logement 60 et à travers le dépôt de colle 64. La colle est ainsi « extrudée » et les deux couches de colle 34 et 54 se forment comme illustré aux figures 6 et 8.

Selon le mode de réalisation selon l'invention illustré à la figure 8, il est prévu une virole complémentaire 62 à section en « L ».

A la figure 8, la virole 62 est agencée radialement intérieure, et elle est rapportée à l'extrémité axiale libre 46 de la bague de liaison 40.

Un bord annulaire circulaire 66 de la virole 42 assure un centrage radial du tronçon d'extrémité 12 de la barre de torsion composite 10.

Le bord 66 permet aussi un écoulement et un échappement de l'air contenu dans le logement 60, tout en « freinant » la colle.

La virole permet ainsi d'aider la maitrise du collage sans excès de débordement.

Selon une variante non représentée, on peut prévoir une virole complémentaire, agencée radialement extérieure, rapportée à l'extrémité axiale libre 30 de l'alésage 26 - c'est-à-dire à l'extrémité axiale libre 30 de la partie centrale tubulaire 24 dans laquelle est formé l'alésage axial 26 qui s'étend axialement.

Cette virole complémentaire radialement extérieure assure les mêmes fonctions que celle de la virole 62 radialement intérieure.

Selon l'invention, il est aussi possible de prévoir deux viroles complémentaires, dont une radialement extérieure et une radialement intérieure.

Les principes du procédé d'assemblage et de collage qui viennent d'être décrits en relation avec le mode de réalisation selon l'invention peuvent être mis en oeuvre lorsque la bague de liaison 40 est rapportée, si elle est montée et fixée sur l'organe de suspension préalablement aux opérations d'assemblage et de collage.

## Revendications

1. Suspension de véhicule automobile comportant :
- une barre de torsion (10) d'orientation axiale (A) dont au moins un tronçon d'extrémité axiale (12) est tubulaire ;
- au moins un organe de suspension associé (22) comportant un alésage (26) d'orientation axiale à l'intérieur duquel le tronçon d'extrémité axiale tubulaire (12) s'étend axialement ;
- une bague de liaison (40) d'orientation axiale qui est liée en rotation à l'organe de suspension (22) et qui s'étend axialement à l'intérieur du tronçon d'extrémité tubulaire (12) de la barre de torsion (10) ;
dans laquelle une paroi interne concave (32) de l'alésage (26) et une paroi externe convexe de la bague de liaison (40) délimitent entre elles un logement annulaire (60) d'orientation axiale (A), apte à recevoir un dépôt de colle, ou d'adhésif, de fixation (64) et dans lequel le tronçon d'extrémité axiale tubulaire (12) de la barre de torsion composite est introduit axialement,
**caractérisée en ce qu'**elle comporte une virole complémentaire (62) à section en L, radialement intérieure ou radialement extérieure, qui est rapportée à une extrémité axiale libre (46) de la bague de liaison (40) ou à une extrémité axiale libre (30) de l'alésage (26), et dont un bord annulaire circulaire assure un centrage radial du tronçon d'extrémité (12) de la barre de torsion (10).

2. Suspension selon la revendication 1, **caractérisée en ce que** la virole complémentaire (62) permet un écoulement et un échappement de l'air contenu dans ledit logement (60), tout en freinant la colle.

3. Suspension selon la revendication 1, **caractérisée en ce que** la bague de liaison (40) comporte une portée cylindrique convexe de centrage qui est reçue axialement, sans jeu radial, à l'intérieur d'une portion complémentaire (52) de l'organe de suspension (22).

4. Suspension selon la revendication 1, **caractérisée en ce que** l'alésage (26) est débouchant axialement, **en ce que** la bague de liaison (40) s'étend axialement à l'intérieur de l'alésage (26) à partir d'une extrémité axiale (28) de l'alésage (26), et **en ce que** le tronçon d'extrémité tubulaire (12) de la barre de torsion (10) s'étend axialement à travers l'alésage (26) à partir de l'autre extrémité axiale (30) de l'alésage (26).

5. Suspension selon la revendication 4, **caractérisée en ce que** la bague de liaison (40) comporte une collerette de fixation (48) qui s'étend radialement vers l'extérieur et qui est fixée à l'organe de suspension (22) au voisinage de ladite une extrémité (28) de l'alésage (26).

6. Suspension selon l'une quelconque des revendications précédentes, **caractérisée en ce qu'**elle comporte des moyens de liaison en rotation du tronçon d'extrémité tubulaire (12) de la barre de torsion (10) et de la bague de liaison (40).

7. Suspension selon la revendication 1, **caractérisée en ce que** la bague de liaison (40) d'orientation axiale est réalisée en une seule pièce avec l'organe de suspension (22).

8. Suspension selon la revendication 7, **caractérisée en ce que** la bague de liaison (40) comporte une collerette de liaison (48) qui s'étend radialement vers l'extérieur et qui est fixée à l'organe de suspension (22) au voisinage de ladite une extrémité (28) de l'alésage (26).

9. Suspension selon l'une quelconque des revendications précédentes, **caractérisée en ce qu'**elle comporte une virole complémentaire radialement intérieure et une virole complémentaire radialement extérieure.

10. Suspension selon l'une quelconque des revendications précédentes, **caractérisée en ce que** chacun des deux tronçons d'extrémité axiale opposés (12) de la barre de torsion (10) est conformé de manière identique et est fixé à un organe de suspension complémentaire associé (22).

11. Suspension selon l'une quelconque des revendications précédentes, **caractérisée en ce que** la barre de torsion (10) est réalisée en matériau composite à matrice synthétique.

12. Suspension selon l'une quelconque des revendications précédentes, **caractérisée en ce que** la barre de torsion (10) est une traverse déformable, et **en ce que** l'organe de suspension est un bras longitudinal qui supporte une roue du véhicule, notamment une roue arrière.

## Patentansprüche

1. Kraftfahrzeugaufhängung, die aufweist:
- einen Drehstab (10) axialer Ausrichtung (A), von dem mindestens ein axialer Endabschnitt (12) rohrförmig ist;
- mindestens ein zugeordnetes Aufhängungselement (22), das eine Bohrung (26) axialer Ausrichtung aufweist, in deren Innerem der rohrförmige axiale Endabschnitt (12) sich axial erstreckt;
- einen Verbindungsring (40) axialer Ausrichtung, der in Drehung mit dem Aufhängungselement (22) verbunden ist und sich axial innerhalb des rohrförmigen Endabschnitts (12) des Drehstabs (10) erstreckt;
wobei eine konkave Innenwand (32) der Bohrung (26) und eine konvexe Außenwand des Verbindungsrings (40) zwischen sich eine ringförmige Aufnahme (60) axialer Ausrichtung (A) begrenzen, die eine Ablagerung von Befestigungskleber oder -klebstoff (64) aufnehmen kann, und in die der rohrförmige axiale Endabschnitt (12) des Verbund-Drehstabs axial eingeführt wird,
**dadurch gekennzeichnet, dass** sie eine komplementäre Zwinge (62) mit L-förmigem Querschnitt radial innen oder radial außen aufweist, die an ein freies axiales Ende (46) des Verbindungsrings (40) oder an ein freies axiales Ende (30) der Bohrung (26) angesetzt ist, und von der ein kreisförmiger Ringrand eine radiale Zentrierung des Endabschnitts (12) des Drehstabs (10) gewährleistet.

2. Aufhängung nach Anspruch 1, **dadurch gekennzeichnet, dass** die komplementäre Zwinge (62) ein Fließen und einen Austritt der in der Aufnahme (60) enthaltenen Luft erlaubt und dabei den Kleber bremst.

3. Aufhängung nach Anspruch 1, **dadurch gekennzeichnet, dass** der Verbindungsring (40) ein konvexes zylindrisches Zentrierauflager aufweist, das axial ohne radiales Spiel im Inneren eines komplementären Teils (52) des Aufhängungselements (22) aufgenommen wird.

4. Aufhängung nach Anspruch 1, **dadurch gekennzeichnet, dass** die Bohrung (26) axial mündet, dass der Verbindungsring (40) sich ausgehend von einem axialen Ende (28) der Bohrung (26) axial im Inneren der Bohrung (26) erstreckt, und dass der rohrförmige Endabschnitt (12) des Drehstabs (10) sich ausgehend vom anderen axialen Ende (30) der Bohrung (26) axial durch die Bohrung (26) erstreckt.

5. Aufhängung nach Anspruch 4, **dadurch gekennzeichnet, dass** der Verbindungsring (40) einen Befestigungskragen (48) aufweist, der sich radial nach außen erstreckt und der am Aufhängungselement (22) in der Nähe des einen Endes (28) der Bohrung (26) befestigt ist.

6. Aufhängung nach einem der vorhergehenden Ansprüche, **dadurch gekennzeichnet, dass** sie Drehverbindungseinrichtungen des rohrförmigen Endabschnitts (12) des Drehstabs (10) und des Verbindungsrings (40) aufweist.

7. Aufhängung nach Anspruch 1, **dadurch gekennzeichnet, dass** der Verbindungsring (40) axialer Ausrichtung aus einem Stück mit dem Aufhängungselement (22) hergestellt wird.

8. Aufhängung nach Anspruch 7, **dadurch gekennzeichnet, dass** der Verbindungsring (40) einen Verbindungskragen (48) aufweist, der sich radial nach außen erstreckt und der am Aufhängungselement (22) in der Nähe des einen Endes (28) der Bohrung (26) befestigt ist.

9. Aufhängung nach einem der vorhergehenden Ansprüche, **dadurch gekennzeichnet, dass** sie eine radial innere komplementäre Zwinge und eine radial äußere komplementäre Zwinge aufweist.

10. Aufhängung nach einem der vorhergehenden Ansprüche, **dadurch gekennzeichnet, dass** jeder der zwei gegenüberliegenden axialen Endabschnitte (12) des Drehstabs (10) gleich gestaltet und an einem zugeordneten komplementären Aufhängungselement (22) befestigt ist.

11. Aufhängung nach einem der vorhergehenden Ansprüche, **dadurch gekennzeichnet, dass** der Drehstab (10) aus Verbundmaterial mit synthetischer Matrix hergestellt ist.

12. Aufhängung nach einem der vorhergehenden Ansprüche, **dadurch gekennzeichnet, dass** der Drehstab (10) ein verformbarer Querträger ist, und dass das Aufhängungselement ein Längsarm ist, der ein Rad des Fahrzeugs trägt, insbesondere ein Hinterrad.

## Claims

1. A motor vehicle suspension comprising:
- a torsion bar (10) of axial orientation (A), at least one axial end section (12) thereof being tubular;
- at least one connected suspension member (22) comprising a bore (26) of axial orientation, wherein the tubular axial end section (12) extends axially;
- a connecting ring (40) of axial orientation which is connected in rotation to the suspension member (22) and which extends axially into the tubular end section (12) of the torsion bar (10);
in which a concave internal wall (32) of the bore (26) and a convex external wall of the connecting ring (40) delimit therebetween an annular housing (60) of axial orientation (A), capable of receiving an adhesive or bonding agent attachment layer (64) and the tubular axial end section (12) of the composite torsion bar being axially introduced therein,
**characterized in that** it comprises a complementary collar (62) that has an L-shaped cross section, radially inside or radially outside, said collar being connected to a free axial end (46) of the connecting ring (40) or to a free axial end (30) of the bore (26), and having an annular circular edge that ensures radial centering of the end section (12) of the torsion bar (10) .

2. The suspension as claimed in claim 1, **characterized in that** the complementary collar (62) permits a flow and an escape of the air contained in said housing (60), whilst retarding the flow of the adhesive.

3. The suspension as claimed in claim 1, **characterized in that** the connecting ring (40) comprises a convex cylindrical centering bearing surface which is received axially, without radial clearance, inside a complementary portion (52) of the suspension member (22).

4. The suspension as claimed in claim 1, **characterized in that** the bore (26) is open axially, **in that** the connecting ring (40) extends axially inside the bore (26) from one axial end (28) of the bore (26), and **in that** the tubular end section (12) of the torsion bar (10) extends axially through the bore (26) from the other axial end (30) of the bore (26).

5. The suspension as claimed in claim 4, **characterized in that** the connecting ring (40) comprises a fixing flange (48) which extends radially outwardly and which is fixed to the suspension member (22) in the vicinity of said one end (28) of the bore (26) .

6. The suspension as claimed in any one of the preceding claims, **characterized in that** it comprises means for connecting in rotation the tubular end section (12) of the torsion bar (10) and of the connecting ring (40).

7. The suspension as claimed in claim 1, **characterized in that** the connecting ring (40) of axial orientation is produced in a single piece with the suspension member (22).

8. The suspension as claimed in claim 7, **characterized in that** the connecting ring (40) comprises a connecting flange (48) which extends radially outwardly and which is fixed to the suspension member (22) in the vicinity of said one end (28) of the bore (26).

9. The suspension as claimed in any one of the preceding claims, **characterized in that** it comprises a complementary collar radially inside and a complementary collar radially outside.

10. The suspension as claimed in any one of the preceding claims, **characterized in that** each of the two opposing axial end sections (12) of the torsion bar (10) is shaped identically and is fixed to an associated complementary suspension member (22).

11. The suspension as claimed in any one of the preceding claims, **characterized in that** the torsion bar (10) is produced from a composite material having a synthetic matrix.

12. The suspension as claimed in any one of the preceding claims, **characterized in that** the torsion bar (10) is a deformable crossmember and **in that** the suspension member is a longitudinal arm which supports a wheel of the vehicle, in particular a rear wheel.
